# EUROPÄISCHE PATENTSCHRIFT

(11) **EP 0 580 992 B1**
(45) Veröffentlichungstag und Bekanntmachung des Hinweises auf die Patenterteilung: **26.02.1997**
(21) Anmeldenummer: 93109058.3
(22) Anmeldetag: 04.06.1993
(51) Int. Cl.: B65B 69/00, B65G 53/24

(54) **Vorrichtung und Verfahren zur Entleerung von Schüttgutbehältern**
Device and method for emptying containers for bulk materials
Dispositif et procédé pour vider des récipients pour matières en vrac

(30) Priorität: 04.06.1992 DE 4218331
(43) Veröffentlichungstag der Anmeldung: 02.02.1994
(73) Patentinhaber: Von Bennigsen-Mackiewicz, Edith, D-37574 Einbeck (DE)
(72) Erfinder: vonBennigsen-Mackiewicz, Andreas, D-37574 Einbeck (DE)

(56) Entgegenhaltungen:
- DE-A- 3 241 480
- DE-B- 1 166 695
- DE-U- 1 927 974
- FR-A- 1 406 647

## Beschreibung

Die Erfindung bezieht sich auf eine Vorrichtung entsprechend dem Oberbegriff des Anspruchs 1.

Die Erfindung bezieht sich ferner auf ein Verfahren entsprechend dem Oberbegriff des Anspruchs 17.

Schüttbehälter wie z.B. Säcke, Großsäcke, Kartons, Trommeln, und sonstige Transportbehälter können bekannterweise derart entleert werden, daß sie an ihrem oberen Speicherende geöffnet werden, wobei anschließend ihr Inhalt durch Sturz über den oberen Rand entleert wird. Diese Methode ist jedoch zwangsläufig mit einer intensiven Staubentwicklung verbunden und es läßt sich die den Behältern entnommene Menge kaum dosieren. Darüberhinaus gestaltet sich die Manipulation des Behälters während des Stürzens in Abhängigkeit von dessen absoluter Größe aufwendig, so daß ein beträchtlicher Bedarf an Hubleistung besteht. Schließlich müssen Auffanggefäße vorgesehen sein, die mit der nachfolgenden Produktionsmaschinerie fest verbunden sind.

Transportbehälter, die eine Öffnung am unteren Speicherende haben, können unterseitig entleert werden, wobei jedoch die Effizienz dieser Methode von der Rieselfähigkeit des Behälterinhalts abhängig ist. So müssen zur Verbesserung der Fließfähigkeit bei schwerfließenden Schüttgütern häufig Hilfsmittel wie Klopfer, Fließbketten, Vibratoren, Belüftungs- und Absaugelemente eingesetzt werden, die teleskopartig von der Unterseite in den Transportbehälterbehälter eingefahren werden. Problematisch ist jedoch auch bei der Methode die Staubentwicklung und die nur mit einem großen Aufwand realisierbare Dosierbarkeit. Auch müssen die Transortbehälter häufig bis zu einem Entleerungspunkt angehoben werden, an dem die unterseitige Entleerung durchgeführt wird, so daß auch bei unterseitiger Entleerung wiederum in Abhängigkeit von der Größe des Transportbehälters der Einsatz eines Hebezeugs erforderlich wird. Schließlich ist bei dieser letztgenannten Methode die teilweise Entleerung eines Transportbehälters, welche mit der Abkopplung von einer Entleerungseinrichtung verbunden ist, mit relativ komplizierten Handhabungen sowie mit einer beträchtlichen Staubentwicklung verbunden. Die Nachteile dieser bekannten Methoden zur Entleerung von Schüttgütern liegen somit zusammengefaßt in der Notwendigkeit von Maßnahmen zur Eindämmung der Staubentfaltung, der schlechten Dosierbarkeit des Entleerungsvorganges und insbesondere in dem, zum An- oder Abkoppeln des Transportbehälters an eine Entleerungseinrichtung liegenden Handhabungsproblemen, welche insbesondere dann auftreten, wenn ein Behälter nur teilweise entleert werden soll.

Bekannt ist ein unter DE -A- 32 41 480 veröffentliches Verfahren, das eine oberseitige Entnahme von Schüttgütern aus Säcken mittels Saugförderung beschreibt. Es handelt sich hierbei um die Entleerung von mehreren hintereinander gestellten Säcken, in die nacheinander ein Saugrohr bekannter Technik eingeführt wird, wonach mittels eines Wasser-Sprühkopfes das Innere des jeweils entleerten Sackes befeuchtet wird, um eine Staubentwicklung bei der weiteren Handhabung der entleerten Säcke zu vermeiden. Ein Verfahren, nach dem das Saugrohr bei der Entnahme des Füllgutes aus dem jeweiligen Sack gehandhabt wird und eine vollständige Entleerung des Sackes sicherstellt, ist in dem zitierten Dokument nicht offenbart und offensichtlich nicht vorgesehen, indem der eigentliche Sinn der Erfindung in dem Befeuchten der Säcke nach Entleerung und der damit vermeidbaren Staubentwicklung zu sehen ist. Schwerfließende Schüttgüter können bekanntlich durch bloßes Einführen eines Saugrohres in einen Sack nicht restlos entnommen werden; es wird vielmehr nur ein Loch in die Schüttgutsäule gesogen, während der Rest des Schüttgutes im Sack verbleibt. - Ein automatischer Betrieb nach dem zitierten Verfahren ist somit unmöglich.

Es ist die Aufgabe der Erfindung, eine Vorrichtung der eingangs bezeichneten Art dahingehend auszugestalten, daß der Entleerungsvorgang ohne aufwendige, an den eigentlichen Schüttbehältern auszuführende Handhabungsbewegungen unter weitgehender Vermeidung einer Staubentwicklung und bei guter Dosierbarkeit möglich ist. Gelöst ist diese Aufgabe bei einer gattungsgemäßen Vorrichtung durch die Merkmale des Kennzeichnungsteils des Anspruchs 1.

Erfindungswesentlich ist, daß eine Absaugvorrichtung verwendet wird, die oberseitig in den Schüttgutbehälter eingeführt wird und den Behälterinhalt lagen- bzw. schichtenweise austrägt. Der Entleerungsvorgang wird durch Einfahren der Absaugvorrichtung in den Transportbehälter ausgelöst, wobei in Verbindung mit einer herkömmlichen Wiegestation die ausgetragene Masse gemessen und der Entleerungsvorgang jederzeit - auch bei lediglich teilweise entleertem Behälter beendet werden kann. Aufgrund des Saugbetriebs wird hierbei naturgemäß wirksam zur Unterdrückung des Staubanfalls beigetragen. Von besonderem Vorteil ist, daß zum Entleeren oder auch lediglich teilweisen Entleeren eines Schüttgutbehälters dieser lediglich in die Entnahmeposition überführt und oberseitig geöffnet werden muß. Es entfallen somit komplizierte Handhabungsbewegungen wie z.B. ein Stürzen des Behälters oder auch ein wesentliches Anheben desselben. Der Entleerungsvorgang kann entsprechend der Steuerung der Absaugvorrichtung kontinuierlich oder auch diskontinuierlich erfolgen und somit vollständig den Belangen einer nachgeschalteten Produktionsanlage angepaßt werden. Die Vorrichtung eignet sich somit insbesondere in Verbindung mit einer überlagerten Steuerung zum Herstellen von Schüttgutmischungen bzw. Gemengen.

Die Merkmale der Ansprüche 2 bis 4 sind auf eine Ausgestaltung der Vorrichtung dahingehend gerichtet, daß mehrere Entnahmepositionen vorgesehen sind, die sämtlich mit Schüttgutbehältern besetzt sein können, mit denen die Absaugvorrichtung in Wechselwirkung treten kann. Die Entnahmepositionen können hierbei entlang einer oder mehrerer Linien, Kurven, insbesondere auch geschlossener Kurven vorgesehen sein, entlang welcher die Absaugvorrichtung verfahrbar gehalten ist. Diese Verfahrbarkeit beinhaltet naturgemäß ein Arretieren an definierten Stellen dieser Reihen bzw. Kurven, die jeweils den Entnahmepositionen entsprechen. Hierzu können herkömmliche Antriebssysteme benutzt werden. Zur Vervielfachung der Entnahmepositionen können diese jedoch auch rasterförmig in einer flächenhaften Verteilung vorgesehen sein, welches eine dementsprechende zweidimensionale Verfahrbarkeit der Absaugvorrichtung und Arretierbarkeit an jeweiligen diskreten, den Entnahmepositionen entsprechenden Punkten voraussetzt.

Die Absaugvorrichtung kann gemäß den Merkmalen des Anspruchs 5 ein Saugrohr sein, welches in den Schüttgutbehälter einführbar ist und zur lagenweisen Erfassung des Behälterinhalts zumindest angenähert in der Ebene einer Schüttgutlage bewegbar ist. Es wird mit anderen Worten davon ausgegangen, daß die Ansaugöffnung des Saugrohres in dieser Lagenebene bewegbar angeordnet ist und es bieten sich praktisch zahlreiche Konstruktionsvarianten zur Erzeugung einer derartigen, die Oberfläche der Schüttgutlage vorzugsweise gleichmäßig abtastenden Bewegung an. Diese Bewegung kann besonders einfach derart realisiert werden, daß das Saugrohr um zwei zueinander senkrechte Achsen pendelnd an einer Plattform aufgehängt ist, wobei jeder dieser Achsen ein individuell steuerbarer Antrieb zugeordnet ist, so daß durch phasenverschobenes gezieltes Ansteuern der einzelnen Antriebe Pendelbewegungen des Saugrohres einstellbar sind, welche in ihrem Ausmaß bzw. der zeitlichen Abfolge der Teilbewegungen jeweils an die Querschnittsform des zu entleerenden Transportbehälters angepaßt sind.

Die Merkmale der Ansprüche 6 und 7 sind auf die Ausgestaltung bzw. Ausrüstung des Saugrohres gerichtet. Über einen Gitterkorb wird ein Ansaugen von größeren Partikeln verhindert. Das untere Ende des Saugrohres ist mit einem Sensor ausgerüstet, der in Verbindung mit einer übergeordneten Steuerung während der Absenkbewegung des Saugrohres dem Erkennen einer hinreichenden Annäherung an die jeweils oberste Lage des abzusaugenden Schüttgutes dient. Praktisch können beliebige Sensoren eingesetzt werden, deren Funktionsprinzip auf einem Abtasten oder auch einem berührungslosen Erfassen eines Annäherungszustandes beruht. Vorzugsweise werden Sensoren eingesetzt, die ein im Rahmen einer Steuerung unmittelbar umsetzbares Meßsignal, beispielsweise ein elektrisches Meßsignal ausgangsseitig erzeugen.

Die Merkmale der Ansprüche 8 bis 10 sind auf eine mögliche Ausführungsform der Befestigung des Saugrohres und der Erzeugung dessen Taumel- oder Pendelbewegungen gerichtet. Zur Erzeugung der letztgenannten Bewegungen dienen zwei übereinander angeordnete, über im peripheren Bereich angeordnete Hubeinrichtungen miteinander in Verbindung stehende Plattformen, wobei an der unteren Plattform das Saugrohr starr befestigt ist. Das Saugrohr kann grundsätzlich teleskopierbar ausgebildet sein. Die Hubeinrichtungen dienen im Falle der synchronen Betätigung dem Anheben bzw. Absenken der unteren Plattform und damit des Saugrohres. Durch nichtsynchrone Ansteuerung der einzelnen Hubeinrichtungen kann die untere Plattform in Pendelbewegungen versetzt werden, deren Art über die individuelle zeitlich phasenverschobene Ansteuerung der einzelnen Hubeinrichtungen vorgebbar ist. Es ist auf diese Weise ein an die Querschnittsform des zu entleerenden Schüttgutbehälters individuell angepaßtes Bewegungsmuster vorgebbar, so daß querschnittsspezifische Bewegungsmuster programmierbar und im Rahmen einer übergeordneten Steuerung elektronisch speicherbar sind. Sämtliche dieser Bewegungsmuster sind vorzugsweise dadurch gekennzeichnet, daß die Abtastbewegung des Saugrohrs an einem Punkt der Ebene einer jeweiligen Lage beginnt, nach einem bestimmten Muster die gesamte Fläche der Lage erfaßt und anschließend, nachdem die, der Lage entsprechende Schüttgutmasse abgesaugt ist, wieder im Anfangspunkt endet.

Die Merkmale des Anspruchs 11 sind auf eine konkrete Ausgestaltung der Plattformen sowie der Auflagerung der oberen Plattform gerichtet, welche über Laufrollen an Hängeschienen eines Gestells geführt ist.

Über die Elemente Schiene/Rolle kann entsprechend den Merkmalen des Anspruchs 13 auch in sehr einfacher Weise eine zweidimensionale Verfahrbarkeit der Absaugvorrichtung realisiert werden.

Es ist ferner die Aufgabe der Erfindung, ein Verfahren zum Entleeren von Schüttgutbehältern entsprechend dem Oberbegriff des Anspruchs 17 dahingehend auszugestalten, daß unter Vermeidung einer Staubentwicklung ohne aufwendige Handhabungsbewegungen an den Schüttgutbehältern diese in dosierbarer Weise entleert werden können. Gelöst ist diese Aufgabe bei einem solchen Verfahren durch die Merkmale des Kennzeichnungsteils des Anspruchs 17.

Der beanspruchte Entleerungsvorgang, falls dieser bis zur vollständigen Entleerung des Schüttgutbehälters fortgeführt werden soll, ist durch eine zyklische Aufeinanderfolge bestimmter Verfahrensschritte gekennzeichnet, die sich unmittelbar aus dem lagenweise erfolgenden Entleerungsvorgang ergeben. Diese einzelnen Verfahrensschritte werden unter Mitwirkung einer Steuerung in zeitlich koordinierter Weise durchgeführt, wobei über einen mit der Absaugvorrichtung zusammenwirkenden Sensor das Erreichen einer Schüttgutlage während der Absenkbewegung signalisiert wird und wobei über den Anfang und das Ende eines in der Ebene einer Lage ablaufenden Bewegungsmusters das Ende des Austragens der einer Lage zugeordneten Schüttgutmasse signalisiert wird, woraufhin eine weitere Absenkbewegung erfolgt und ein neues Bewegungsmuster gestartet wird.

Entsprechend den Merkmalen des Anspruchs 19 wird über eine Steuerung ebenfalls die Bewegung der Absaugvorrichtung zwischen einzelnen Entnahmestationen bewirkt, die mit Schüttgutbehältern besetzt sind.

Die Erfindung wird im folgenden unter Bezugnahme auf das in den Zeichnungen dargestellte Ausführungsbeispiel näher erläutert werden. Es zeigen:
Figur 1 eine schematische Darstellung einer Seitenansicht der erfindungsgemäßen Entleerungseinrichtung;

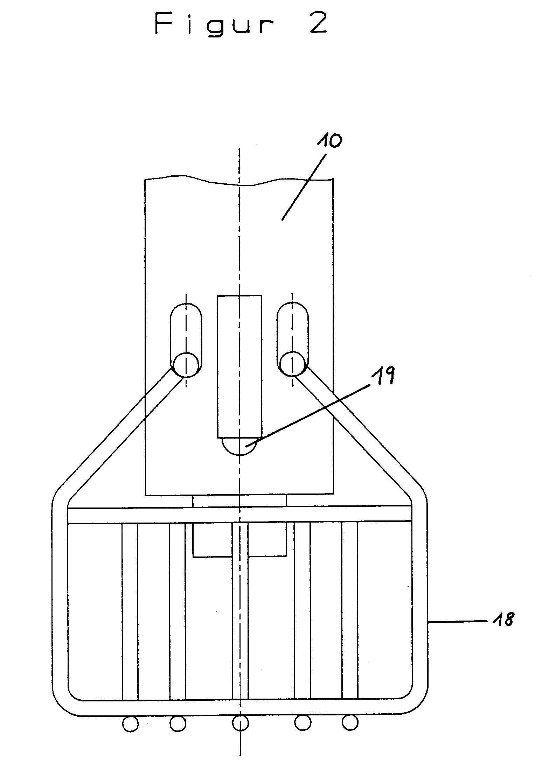

Figur 2 eine Einzelheit II der Figur 1 in vergrößerter Darstellung im Schnitt;
Figur 3 eine Darstellung eines Bewegungsmusters des Endpunktes der Absaugvorrichtung zur Erfassung der Querschnittsform des Transportbehälters;
Figur 4 eine Darstellung eines anderen Bewegungsmusters des Endpunktes der Absaugvorrichtung zur Erfassung der Querschnittsform eines Transportbehälters;
Figur 5 eine Darstellung der Zuordnung der Positionen der einzelnen Transportbehälter in der Bewegungsbahn der Absaugvorrichtung.

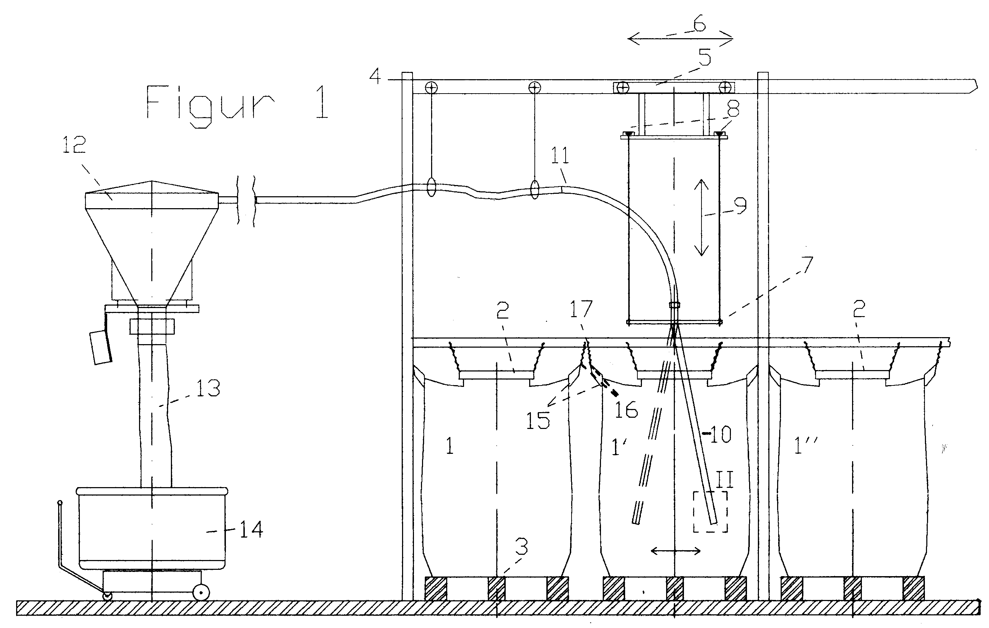

Mit 1, 1', 1'' sind in Figur 1 drei untereinander gleichartige in einer Reihe mit geringfügigem Abstand zueinander angeordnete, jeweils mit einer oberseitigen Öffnung 2 versehene Transportbehälter bezeichnet, die auf herkömmlichen Standardpaletten 3 aufgelagert sind. Es handelt sich bei den Transportbehältern um aus biegeschlaffem Material hergestellte Großsäcke mit einem Volumen von 1-2 m³ und einer Standfläche von ca. 1 m². Mit 4 ist ein Gestell bezeichnet, das der gradlinigen Führung einer Plattform 5 in Richtung der Pfeile 6 dient, welche Plattform 5 als Träger einer weiteren Plattform 7 fungiert, die an ersterer abgehängt ist. Die Plattformen 5, 7 weisen in etwa eine gleiche Größe und Gestalt auf und sind beispielsweise quadratisch oder allgemein viereckig ausgebildet. Die Abhängung der Plattform 7 erfolgt über vier jeweils an den Eckpunkten angreifende individuell steuerbare Hubeinrichtungen 8, deren Bedeutung im folgenden noch erläutert werden wird. Durch synchrone Betätigung sämtlicher Hubeinrichtungen 8 kann somit die Plattform 7 vertikal in Richtung der Pfeile 9 bewegt werden.

Die Plattform 7 steht mit einem Saugrohr 10 in starrer Verbindung, welches Saugrohr über einen flexiblen Schlauch 11 mit einer herkömmlichen, hier nicht näher erläuterten Saugeinrichtung 12 in Verbindung steht. Die Saugeinrichtung 12 kann baulich mit einer Wiegeeinrichtung zusammengefaßt sein, und es ist mit 13 ein Schlauch bezeichnet, der der Umfüllung des aus dem Transportbehälter über das Saugrohr 10 entnommenen Schüttgutes in ein Auffanggefäß 14 dient.

In der zeichnerischen Darstellung befindet sich das Saugrohr 10 innerhalb des mittleren Transportbehälters 1'.

Damit die Transportbehälter 1, 1', 1'' während ihrer Entleerung nicht in sich zusammenfallen und die oberen Öffnungen 2 unverändert bleiben, werden die an den vier oberen Ecken der Transportbehälter befindlichen Tragschlaufen 15 mittels an Zugfedern hängenden Haken 16 gegen vertikal oberhalb der Transportbehälter und horizontal knapp außerhalb der Grundfläche der Transportbehälter befindlichen Fixpunkte 17 gespannt. Ebenfalls mittels vier Federzughaken mit ähnlich angeordneten Fixpunkten wird der, die Öffnung 2 definierende Einfüllstutzen eines jeden Transportbehälters gerafft und aufgespannt.

Das Saugrohr 10 weist eine Länge auf, die um ca. 20 cm größer als die Höhe des Transportbehälters bemessen ist. Das Saugrohr 10 kann auch teleskopierbar ausgebildet sein und muß diese Längenbedingung in diesem Fall im ausgefahrenen Zustand erfüllen. Das Saugrohr 10 ist mit einer Sekundärlufteinstellung versehen. Am unteren Ende des Saugrohres 10 befindet sich ein Gitterkorb 18, der das Ansaugen von Klumpen oder Folien verhindert. Ebenfalls am unteren Ende des Saugrohres 10 befindet sich ein Sensor 19, der tastend oder auch berührungslos der Erfassung der vertikalen Position des Saugrohres 10 dient. Der Sensor 19 liefert ein die Position des Saugrohres 10 beschreibendes Signal, das im Rahmen einer übergeordneten Steuerung auswertbar ist.

Die Hubeinrichtungen 8 sind derart ausgelegt, daß die Plattform 7 in Richtung der Pfeile 9 in eine solche Höhenposition verfahrbar ist, in welcher das Saugrohr 10 vollständig aus dem Transportbehälter entfernt ist.

Soll aus einem der Transportbehälter 1, 1', 1'' Schüttgut entnommen werden, wird zunächst die Plattform 5 über die, dem zu entleerenden Transportbehälter zugeordnete Position in Richtung der Pfeile 6 verfahren. Es ist dies in der zeichnerischen Darstellung der Transportbehälter 1'. Anschließend wird nach Aktivierung der Saugeinrichtung 12 durch synchrones Betätigen sämtlicher Hubeinrichtungen 8 die Plattform 7 abgesenkt, wobei, nachdem sich der Transportbehälter 1' mittig unterhalb der Plattform 7 befindet, das Saugrohr 10 mit Gitterkorb 18 und Sensor 19 über die Öffnung 2 in den Transportbehälter 1' eingeführt wird. Sobald das Saugrohr 10, insbesondere der Sensor 19 die Oberfläche des Schüttgutes erreicht hat, wird ein dieser Position entsprechendes Signal einer Steuerung übertragen, woraufhin die weitere Absenkbewegung beendet wird. In unmittelbarer Nähe der Saugöffnung des Saugrohres 10 beginnt nunmehr der Entleerungsvorgang. Zur vollständigen Erfassung einer der jeweiligen Höhenpositionen des Saugrohres 10 entsprechenden Lage des Schüttgutes werden im folgenden die Hubeinrichtungen 8 in einer aufeinander abgestimmten Weise dahingehend betätigt, daß die Saugöffnung des Saugrohres 10 in eine definierte Pendelbewegung versetzt wird, die an die Querschnittsform des Transportbehälters 1' angepaßt ist. Ist als Folge dieser Pendelbewegung eine Lage des Schüttgutes abgetragen, wird die Plattform 7 durch synchrone Betätigung sämtlicher Hubeinrichtungen 8 zur Erfassung der nächsten Lage des Schüttgutes abgesenkt. Diese aufeinander folgenden Absenk- und anschließenden Pendelbewegungen werden wiederholt, so daß der jeweilige Transportbehälter lagenweise entleert wird. Der Entleerungsvorgang kann jederzeit beendet werden, indem die Plattform 7 in Richtung der Pfeile 9 angehoben und das Saugrohr 10 aus dem Transportbehälter 1' zurückgezogen wird.

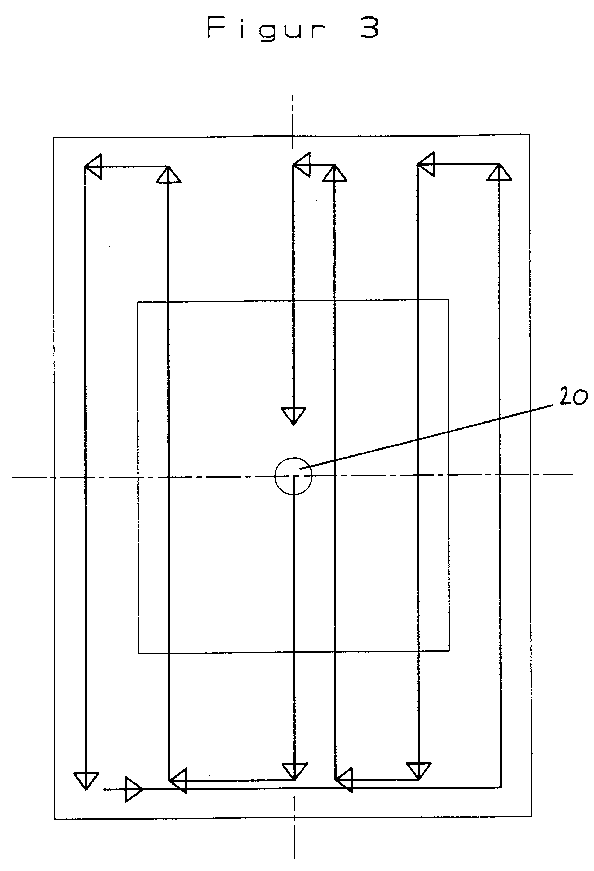

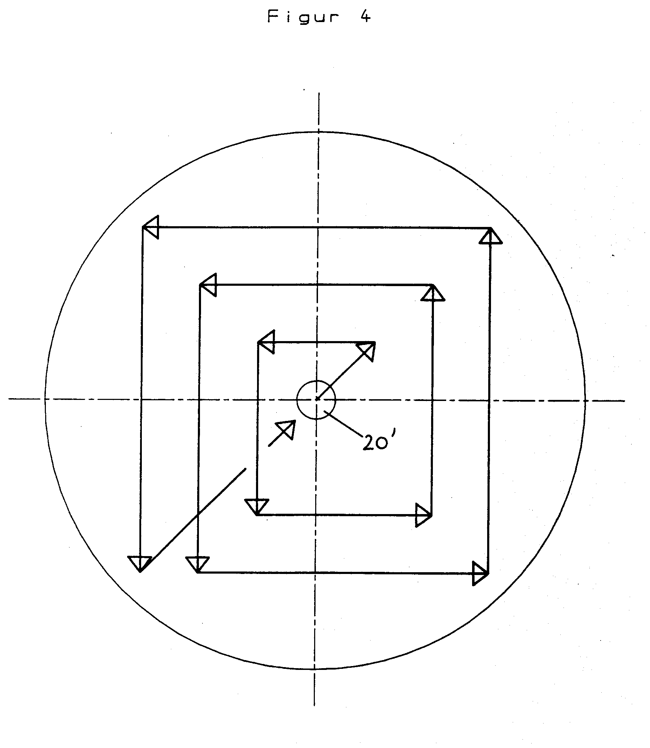

Die Figuren 3 und 4 zeigen jeweils rechteckige bzw. kreisförmige Querschnittsformen von Transportbehältern mit jeweils einem querschnittsspezifischen Bewegungsmuster des Saugrohres. Gemeinsam ist beiden Bewegungsmustern, daß zu Beginn des Absaugvorganges einer Schüttgutlage sich das Saugrohr in einer mittigen Position 20, 20' befindet und daß nach Beendigung des Absaugens einer Schüttgutlage das Saugrohr in die mittige Position 20, 20' zurückkehrt. Die Pfeile auf den ausgezogenen Linien der Bewegungsmuster kennzeichnen den zeitlich-räumlichen Ablauf der Bewegungsmuster, die jeweils in sich geschlossene, aus geradlinigen Streckenabschnitten zusammengesetzte Linienzüge bilden. Die Eckpunkte dieser Linienzüge bilden markante Punkte für die Saugöffnung des Saugrohres, welche durch entsprechende Steuerung der Hubeinrichtungen 8 erreicht werden.

Absaugmuster der lediglich beispielhaft in den Figuren 3 und 4 dargestellten querschnittsspezifischen Art werden programmiertechnisch festgehalten, so daß diese Bewegungsmuster beliebig wiederholbar sind. Derartige, jeweils querschnittsspezifische Absaugmuster können für jede beliebige Grundrißform eines Transportbehälters erstellt werden.

Bei der obigen Darstellung ist davon ausgegangen worden, daß vertikale Bewegungen des Saugrohres und Pendelbewegungen stets nacheinander und nicht gleichzeitig erfolgen. Es ist grundsätzlich auch denkbar, im Rahmen des Bewegungsmusters der Pendelbewegungen auch vertikale Bewegungen auszuführen, und zwar vorzugsweise stufenlos, so daß Transportbehälter mit starrem und flachem Boden restlos geleert werden können.

Grundposition bzw. Rückzugsposition des Saugrohres ist vorzugsweise stets durch eine vertikal ausgerichtete zentrische Stellung des Saugrohres bezüglich des jeweiligen Transportbehälters gekennzeichnet.

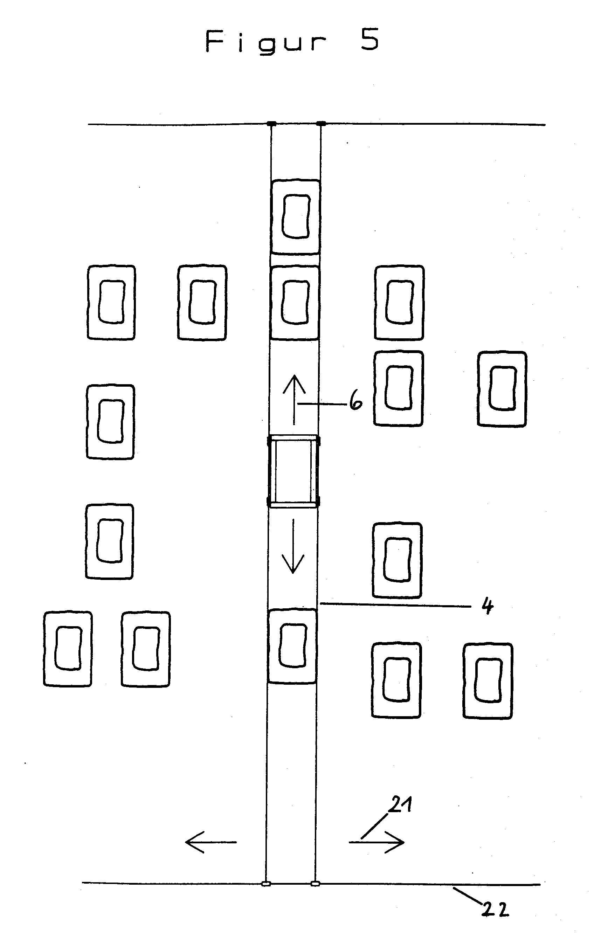

Bei obiger Beschreibung der Figur 1 ist davon ausgegangen worden, daß die, zur Positionierung des Saugrohres 10 dienende Plattform 5 lediglich eindimensional, nämlich in Richtung der Pfeile 6 (Figur 1) verfahrbar angeordnet ist. Dies bedeutet, daß die zu entleerenden Transportbehälter in einer Reihe angeordnet sein müssen. Figur 5 zeigt eine Variante dieses Prinzips insoweit, als hiernach die Plattform 5 zweidimensional verfahrbar ist, nämlich in Richtung der Pfeile 6 einerseits und senkrecht zu dieser Richtung, nämlich in Richtung der Pfeile 21 andererseits. Es ist das die Plattform 5 auflagernde Gestell 4 zu diesem Zweck seinerseits durch Schienen 22 geführt, die sich parallel zu den Pfeilen 21 erstrecken. Aus der überlagerten Bewegung der Plattform 5 relativ zu dem Gestell 4 und derjenigen des Gestells 4 relativ zu den Schienen 22 sind somit zweidimensionale Zustellbewegungen der Plattform 5 realisierbar. Man erkennt, daß bei dieser Variante die zu entleerenden Transportbehälter in einer zweidimensionalen Verteilung angeordnet sein können und entsprechend vervielfacht sind.

## Patentansprüche

1. Vorrichtung zur Entleerung von Schüttgutbehältern mit einer oberseitig in den sich in einer Entnahmeposition befindlichen Schüttgutbehälter (1,1',1'') einführbaren Absaugvorrichtung (10), dadurch gekennzeichnet, daß die Absaugvorrichtung (10) an einem Gestell (4) stufenweise absenkbar angeordnet ist und das Ansaugende der Absaugvorrichtung (10) zum lagenweisen Entleeren des Behälterinhalts in der Ebene jeweils einer Lage flächenhaft bewegbar ist.

2. Vorrichtung nach Anspruch 1, dadurch gekennzeichnet,
- daß mehrere Entnahmepositionen für Schüttgutbehälter in einer Reihe angeordnet sind,
- daß die Absaugvorrichtung entlang dieser Reihe verfahrbar angeordnet ist und in jeder Entnahmeposition in den jeweiligen Schüttgutbehälter einführbar ist.

3. Vorrichtung nach Anspruch 1, dadurch gekennzeichnet,
- daß meherere Entnahmepositionen für Schüttgüter entlang einer Kurve angeordnet sind,
- daß die Ansaugvorrichtung entlang dieser Kurve verfahrbar angeordnet ist und in jeder Entnahmeposition in den jeweiligen Schüttbehälter einführbar ist.

4. Vorrichtung nach Anspruch 1, dadurch gekennzeichnet,
- daß mehere Entnahmepositionen in einer flächenhaften Verteilung angeordnet sind,
- daß die Absaugvorrichtung zweidimensional in der Ebene dieser Verteilung verfahrbar angeordnet ist und in jeder Entnahmeposition in den jeweiligen Schüttbehälter einführbar ist.

5. Vorrichtung nach einem der vorgenannten Ansprüche 1 bis 4 dadurch gekennzeichnet,
- daß die Absaugvorrichtung durch wenigstens ein Saugrohr (10) gebildet wird und
- daß das Saugrohr (10) zur lagenweisen Erfassung des Behälterinhalts in der Ebene jeweils einer Lage flächenhaft nach Maßgabe der Querschnittsform des Schüttgutbehälters bewegbar angeordnet ist.

6. Vorrichtung nach Anspruch 5, dadurch gekennzeichnet,
- daß am unteren Ende des Saugrohres (10) ein Gitterkorb (18) angeordnet ist, dessen maximale Durchlaßschlitze vorzugsweise ca. 50% des Saugrohrdurchmessers betragen.

7. Vorrichtung nach Anspruch 5 oder 6, dadurch gekennzeichnet,
- daß am unteren Ende des Saugrohres (10) ein Sensor (19) angeordnet ist, über welchen - in Richtung der Saugrohrachse gesehen - eine Annäherung desselben gegenüber dem Schüttgut feststellbar ist.

8. Vorrichtung nach einem der vorangegangenen Ansprüche 5 bis 7, dadurch gekennzeichnet,
- daß das Saugrohr (10) unterseitig an einer Plattform (7)
- sich im wesentlichen senkrecht zu deren Ebene erstreckend - angeordnet ist und
- daß die Plattform (7) gegenüber dem ortsfest in der Entnahmeposition befindlichen Schüttgutbehälter vertikal verfahrbar angeordnet ist.

9. Vorrichtung nach Anspruch 8, dadurch gekennzeichnet,
- daß die Plattform (7) in definierte Pendelbewegungen versetzbar ist.

10. Vorrichtung nach Anspruch 9, dadurch gekennzeichnet,
- daß die Plattform (7) über mehrere, im peripheren Bereich angreifende, individuell steuerbare Hubeinrichtungen (8) in Pendelbewegungen versetzbar ist und
- daß die Hubeinrichtungen (8) an einer, der Plattform (7) konturenmäßig im wesentlichen entsprechenden, in einer Richtung (6) verfahrbaren Plattform (5) angebracht sind.

11. Vorrichtung nach Anspruch 10, dadurch gekennzeichnet,
- daß die Plattformen (7,5) viereckig ausgestaltet sind,
- daß die Hubeinrichtungen (8) jeweils an den Eckpunkten der Plattformen (7,5) angreifen und
- daß die Plattform (5) über Laufrollen an sich in der Richtung (6) erstreckenden Hängeschienen eines ortsfest angeordneten Gestells (4) verfahrbar ist.

12. Vorrichtung nach einem der vorangegangenen Ansprüche 5 bis 11, dadurch gekennzeichnet,
- daß das Saugrohr (10) eine Länge aufweist, die wenigstens 20 cm größer als die Höhe des Schüttgutbehälters bemessen ist und
- daß das Saugrohr (10) mit einem einstellbaren Sekundärluft-Einstellventil versehen ist.

13. Vorrichtung nach einem der vorangegangenen Ansprüche 11 oder 12, dadurch gekennzeichnet,
- daß die die Plattform (5) führenden Hängeschienen ihrerseits über Laufrollen auf Schienen verfahrbar angeordnet sind, welch letztere sich senkrecht zu den Hängeschienen erstrecken.

14. Vorrichtung nach einem der vorangegangenen Ansprüche 1 bis 13, dadurch gekennzeichnet,
- daß in jeder Entnahmeposition eines Schüttgutbehälters ein System von Zugfedern vorgesehen ist, um die Einfüllstutzen und die Gestalt des biegeschlaff ausgebildeten Schüttgutbehälters zu fixieren.

15. Vorrichtung nach einem der vorangegangenen Ansprüche 1 bis 14, dadurch gekennzeichnet,
- daß die Absaugvorrichtung über eine flexible Leitung mit einer herkömmlichen Saugeinrichtung (12) in Verbindung steht

16. Vorrichtung nach einem der vorangegangenen Ansprüche 1 bis 15, gekennzeichnet durch eine übergeordnete Steuerung für die Bewegungen der Absaugvorrichtung zwischen den linien- oder flächenhaft angeordneten Entnahmepositionen der Schüttgutbehälter sowie für die vertikale und lagenspezifische Bewegung des Saugrohres (10).

17. Verfahren zum oberseitigen Entleeren von Schüttgutbehältern unter Verwendung einer Vorrichtung nach einem der vorgenannten Ansprüche 1 bis 16, gekennzeichnet durch die folgenden Schritte
- (a) Absenkung des mit Unterdruck beaufschlagten Saugrohres (10) in den in der Entnahmeposition befindlichen Schüttgutbehälter,
- (b) Beendigung der Absenkbewegung, sobald die oberste Schüttgutlage erreicht ist,
- (c) Durchführung einer zumindest angenäherten in der Ebene der Schüttgutlage nach einem vorgegebenen Bewegungsmuster ablaufenden, den gesamten Querschnitt des Schüttgutbehälters zumindest angenähert gleichmäßig erfassenden Bewegung des Saugrohres (10) zwecks Absaugens der der jeweiligen Lage entsprechenden Schüttgutmasse,
- (d) Absenkung des Saugrohres (10) bis zur nächstfolgenden Lage und
- (e) Wiederholung der Schritte (b) und (c) bis zum Abbruch des Entleerungsvorganges oder bis zur vollständigen Entleerung des Schüttgutbehälters.

18. Verfahren nach Anspruch 17, dadurch gekennzeichnet,
- daß die Absenkbewegung des Saugrohres (10) durch synchrone Betätigung sämtlicher Hubeinrichtungen (8) erfolgt und
- daß die Pendel- bzw. Taumelbewegung innerhalb einer Schüttgutlage durch dementsprechendes individuelles Ansteuern der einzelnen Hubeinrichtungen (8) erfolgt, und zwar nach Maßgabe der jeweils zu erzielenden, an die Querschnittsform des zu entleerenden Schüttgutbehälters angepaßten Pendelbewegung.

19. Verfahren nach einem der Ansprüche 17 oder 18, gekennzeichnet durch ein Verfahren des Saugrohres zu einer, mit einem Schüttgutbehälter besetzten Entnahmeposition, Durchführung der Schritte (a) bis (e) und anschließendes Verfahren der Absaugvorrichtung zu wenigstens einer weiteren, mit einem Schüttgutbehälter besetzten Entnahmeposition.

## Claims

1. Device for emptying bulk material containers; comprising a suction device (10) which can be inserted into the top of a bulk material container (1,1,1) which is in the emptying position, wherein the suction device (10) is attached to a mount (4) and can be lowered step-by-step and the suction part of the suction device (10) can be moved for the purpose of emptying a layer of the contents of the container along the entire surface of said level.

2. Device as defined in Claim 1, wherein
- several bulk material container emptying positions are aligned in a row,
- and wherein the suction device can move along this row and can be inserted into the emptying position of each bulk material container.

3. Device as defined in Claim 1, wherein
- several bulk material emptying positions are aligned along a curve,
- and wherein the suction device can move along this row and can be inserted into the emptying position of each bulk material container.

4. Device as defined in Claim 1, wherein
- several emptying positions are distributed over a two-dimensional plane,
- and wherein the suction device can move two-dimensionally in this plane and can be inserted into the emptying position of each bulk material container.

5. Device as defined in one of the foregoing Claims 1 to 4, wherein
- the suction device comprises at least one suction tube (10) and,
- in order to empty the contents of the container layer by layer, said suction tube (10) can move in two dimensions over each layer according to the cross-dimensional shape of the container.

6. Device as defined in Claim 5, wherein
- a cage (18) is affixed to the lower end of the suction tube (10), the width of whose grid should preferably be no wider than a maximum of approx. half of the diameter of the suction tube.

7. Device as defined in Claim 5 and/or 6, wherein
- a sensor (19) is located at the lower end of the suction tube (10), by means of which sensor it is possible to determine whether, as seen from the axis of the suction tube, the suction tube is approaching the bulk material.

8. Device as defined in one of the previous claims 5 to 7, wherein
- the lower end of the suction tube (10) is attached to a platform and
- is positioned approximately at a right angle to said platform,
- and wherein said platform (7) can move vertically up or down in relation to the bulk material container, which is fixed in the emptying position.

9. Device as defined in Claim 8, wherein
- the platform (7) can be set in motion in a defined pendulum movement.

10. Device as defined in Claim 9, wherein
- the platform (7) can be set in pendulum motion by means of several lifting devices (8), that can be individually controlled and that grip the platform along its peripheral areas,
- and wherein the lifting devices (8) are mounted on a platform (5) which can move in one direction and which has substantially the same shape as platform (7).

11. Device as defined in Claim 10, wherein
- the platforms (7, 5) are quadrangular,
- and wherein the lifting devices (8) grip the corners of the platforms (7, 5),
- and wherein platform (5) can move by means of rollers along suspended rails attached to a fixed mount (4) in the direction of the rails (6).

12. Device as defined in one of the foregoing Claims 5 to 11, wherein
- the suction tube (10) is at least 20 cm longer than the height of the bulk materials container,
- and wherein the suction tube (10) is equipped with an adjustable valve for bypass air.

13. Device as defined in one of the foregoing Claims 12 or 13, wherein
- the suspended rails along which platform (5) travels can themselves, by means of rollers, move on rails which are vertical to the aforementioned suspended rails.

14. Device as defined in one of the foregoing Claims 1 to 13, wherein
- a system of tension springs is provided at every emptying position, in order to secure the filler connections and the shape of the flexible bulk materials container.

15. Device as defined in one of the foregoing Claims 1 to 14, wherein
- the suction device is hooked to a conventional suction mechanism by means of a flexible connection.

16. Device as defined in one of the foregoing Claims 1 to 15, further comprising a system control system that regulates the movements of the suction device between the emptying positions of the bulk materials containers, aligned in a row or dispersed over a two-dimensional plane, and for the vertical and step-by-step movement of the suction tube (10).

17. Procedure for emptying hulk materials containers from above, utilizing a device as defined in one of the foregoing Claims 1 to 16, comprising the following steps,
- (a) lowering of the suction tube (10), which is under a partial vacuum, to the bulk materials container which is in the emptying position.
- (b) ending of the lowering movement as soon as the uppermost bulk material layer has been reached,
- (c) execution of a suction tube (10) movement which takes place substantially on the plane of the bulk materials layer and according to a predetermined pattern of movement, and which covers the whole cross section of the bulk materials container more-or-less evenly in order to evacuate the bulk materials in that layer,
- (d) lowering of the suction tube (10) to the next layer and
- (e) repetition of the steps (b) and (c) until the emptying process is interrupted or until the bulk materials container has been completely emptied.

18. Procedure as defined in Claim 17, wherein
- the lowering movement of the suction tube (10) is caused by the synchronous action of all the lifting devices and
- the pendulum or tumbler motion within one bulk materials layer is caused by the individual control of the lifting devices, and is in accordance with the pendulum movement required to cover the cross-sectional shape of each bulk materials container.

19. Procedure as defined in Claim 17 or 18, comprising a movement of the suction tube to all emptying position occupied by a bulk materials container, execution of the steps (a) to (e) and the subsequent movement of the suction tube to at least one further emptying position occupied by a bulk materials container.

## Revendications

1. Dispositif servant à vider des réservoirs de produit en vrac, équipé en son sommet d'un dispositif d'aspiration (10) introductible dans un réservoir de produit en vrac (1, 1', 1'') se trouvant en position de prélèvement, **caractérisé en ce que** le dispositif d'aspiration (10) est agencé contre un châssis (41) abaissable à plusieurs niveaux et que la partie aspirante du dispositif d'aspiration (101) est déplaçable superficiellement dans le plan d'une couche pour vider le contenu du réservoir couche par couche.

2. Dispositif selon la revendication 1, **caractérisé en ce que**
- sont disposées sur une rangée plusieurs positions de prélèvement hors des réservoirs de produit en vrac;
- le dispositif d'aspiration est agencé déplaçable le long de cette rangée et que, dans toute position de prélèvement, il est introductible dans le réservoir correspondant de produit en vrac.

3. Dispositif selon la revendication 1, **caractérisé en ce que**
- sont disposées le long d'une courbe plusieurs positions de prélèvement hors des réservoirs de produit en vrac;
- le dispositif d'aspiration est agencé déplaçable le long de cette courbe et que, dans toute position de prélèvement, il est introductible dans le réservoir correspondant de produit en vrac.

4. Dispositif selon la revendication 1, **caractérisé en ce que**
- plusieurs positions de prélèvement sont disposées distribuées sur une surface;
- le dispositif d'aspiration est disposé déplaçable en deux dimensions sur ce plan de distribution et que, dans toute position de prélèvement, il est introductible dans le réservoir correspondant de produit en vrac.

5. Dispositif selon l'une des précédentes revendications 1 à 4**, caractérisé en ce que**
- le dispositif d'aspiration est formé par au moins un tuyau d'aspiration (10) et
- que ce tuyau d'aspiration (10) est disposé déplaçable, dans les limites imposées par la géométrie de la section du réservoir de produit en vrac, superficiellement dans le plan de chaque couche pour saisir le contenu du réservoir couche par couche.

6. Dispositif selon la revendication 5, **caractérisé en ce que**
- une crépine (18) est installé contre l'extrémité inférieure du tuyau d'aspiration (10). Les fentes maxi. de passage équipant la crépine (18) représentent de préférence env. 50% du diamètre du tuyau d'aspiration.

7. Dispositif selon les revendications 5 ou 6, **caractérisé en ce que**
- un capteur (19) est installé contre l'extrémité inférieure du tuyau d'aspiration (10), ce capteur (19) permettant - vu dans le sens de l'axe du tuyau d'aspiration - de détecter l'approche de ce dernier par rapport au produit en vrac.

8. Dispositif selon l'une des précédentes revendications 5 à 7, **caractérisé en ce que**
- le tuyau d'aspiration (10) est disposé en sa partie inférieure contre une plateforme (7).
- il est disposé essentiellement à la verticale par rapport au plan formé par cette plateforme (7) et que
- cette plateforme (7) est disposée déplaçable verticalement par rapport au réservoir de produit en vrac fixe se trouvant en position de prélèvement.

9. Dispositif selon la revendication 8, **caractérisé en ce que**
- la plateforme (7) est décalable selon des mouvements pendulaires définis.

10. Dispositif selon la revendication 9**, caractérisé en ce que**
- la plateforme (7) peut entrer en mouvement pendulaire sous l'effet de plusieurs dispositifs de levage (8) pilotables individuellement et attaquant la plateforme (7) en sa zone périphérique, et que
- les dispositifs de levage (8) sont fixés contre une plateforme (5) déplaçable dans une direction (6) et dont les contours correspondent pour l'essentiel à ceux de la plateforme (7).

11. Dispositif selon la revendication 10, **caractérisé en ce que**
- les plateformes (7, 5) ont la forme d'un quadrilatère;
- les dispositifs de levage (8) attaquent les plateformes (7, 5) en chacun de leurs angles et que
- la plateforme (5) est déplaçable par le biais de roulettes contre des rails suspendus s'étendant dans la direction (6) d'un châssis (4) disposé en poste fixe.

12. Dispositif selon l'une des précédentes revendications 5 à 11, **caractérisé en ce que**
- le tuyau d'aspiration (10) présente une longueur calculée pour dépasser d'au moins 20 cm la hauteur du réservoir de produit en vrac;
- le tuyau d'aspiration (10) est équipé d'une vanne réglable permettant de régler l'air secondaire.

13. Dispositif selon l'une des précédentes revendications 11 ou 12, **caractérisé en ce que**
- les rails suspendus guidant la plateforme (5) sont, de leur côté, disposés déplaçables par des roulettes sur des rails s'étendant perpendiculairement aux rails suspendus.

14. Dispositif selon l'une des précédentes revendications 1 à 13, **caractérisé en ce que**
- dans chaque position de prélèvement hors d'un réservoir de produit en vrac est prévu un système de ressorts de traction pour immobiliser en position les manchons de remplissage et les réservoirs aux formes passivement souples de produits en vrac.

15. Dispositif selon l'une des précédentes revendications 1 à 14, **caractérisé en ce que**
- le dispositif d'aspiration est relié par une conduite flexible à une installation d'aspiration (12) conventionnelle.

16. Dispositif selon l'une des précédentes revendications 1 à 15, **caractérisé en ce qu**'une commande-maître pilote les mouvements du dispositif d'aspiration entre les positions de prélèvement, disposées en ligne ou superficiellement, hors des réservoirs de produits en vrac, ainsi que les mouvements verticaux et spécifiques aux couches de produit requis par le tuyau d'aspiration (10).

17. Procédé de vidange par le haut de réservoirs de produit en vrac, utilisant un dispositif selon l'une des précédentes revendications 1 à 16, **caractérisé par** l'exécution des séquences suivantes:
- (a) Abaissement du tuyau d'aspiration (10) dans lequel règne une dépression, jusque dans le réservoir de produit en vrac se trouvant en position de prélèvement;
- (b) Cessation du mouvement descendant dès que le tuyau d'aspiration atteint la couche supérieure du produit en vrac;
- (c) Exécution d'un mouvement du tuyau d'aspiration (10) se déroulant au moins approximativement dans le plan d'une couche de produit en vrac et couvrant régulièrement de manière au moins approximative toute la section du réservoir de produit en vrac, dans le but d'aspirer la masse de produit en vrac formant la couche correspondante;
- (d) Abaissement du tuyau d'aspiration (10) jusqu'à la couche suivante et
- (e) Répétition des séquences (b) et (c) jusqu'à interruption de l'opération de vidange ou jusqu'à ce que le réservoir de produit en vrac soit complètement vide.

18. Procédé selon la revendication 17, **caractérisé en ce que**
- le mouvement descendant du tuyau d'aspiration (10) a lieu par actionnement synchrone de tous les dispositifs de levage (8) et que
- le mouvement pendulaire et de nutation à l'intérieur d'une couche de produit en vrac s'obtient par pilotage individuel approprié de chaque dispositif de levage (8), à savoir en fonction du mouvement pendulaire à obtenir et adapté à la géométrie de la section du réservoir de produit en vrac à vider.

19. Procédé selon l'une des revendications 17 ou 18, **caractérisé par** un déplacement du tuyau d'aspiration vers une position de prélèvement occupée par un réservoir de produit en vrac, par l'exécution des séquences (a) à (e) et par le déplacement consécutif du dispositif d'aspiration vers au moins une autre position de prélèvement occupée par un réservoir de produit en vrac.
